# EUROPEAN PATENT APPLICATION

(11) **EP 1 840 885 A1**
(43) Date of publication of application: **03.10.2007**
(21) Application number: 07006742.6
(22) Date of filing: 30.03.2007
(51) Int. Cl.: G11B 5/706, G11B 5/714, G11B 5/84

(54) **Magnetic recording medium and process for producing the same**

(30) Priority: 31.03.2006 JP 2006099934
(71) Applicant: FUJIFILM Corporation, Minato-ku Tokyo (JP)
(72) Inventor: Hanai, Kazuko, Odawara-shi Kanagawa (JP)
(74) Representative: HOFFMANN EITLE

(57) **Abstract**

A magnetic recording medium comprising a substrate and a magnetic layer containing ferromagnetic metal powder and a binder, wherein the ferromagnetic metal powder contains iron, cobalt and from 2 to 20 atom% of yttrium based on a total of iron and cobalt contained in the ferromagnetic metal powder and has an average length of 50 nm or smaller, and the magnetic recording medium has a test value of at least 100 passes in a magnetoresistive head resistance reduction test performed as defined herein.

## Description

### FIELD OF THE INVENTION

This invention relates to a magnetic recording medium and a process of producing the same. More particularly it relates to a magnetic recording medium excellent in running durability and electromagnetic characteristics and a process of making the same.

### BACKGROUND OF THE INVENTION

In recent years, means for rapidly transmitting terabyte-class information have developed remarkably, making it possible to transfer images and data furnishing immense information. With the development, demands for high technology for recording, reproducing, and storing the information have been increasing. Types of media for recording and reproducing information include flexible discs, magnetic drums, hard discs, and magnetic tapes. In particular, magnetic tapes have a high recording capacity per reel and take a large role in information storage applications including data backup.

A read head based on magnetoresistance (MR head) has been proposed and now come to be used in hard disks. JP-A-8-227517 (corresponding to U.S. Patent 5, 904, 979) proposes application of an MR head to magnetic tape. An MR head provides a few times as much output as an inductive head and, having no inductive coil, achieves great reduction of equipment noise such as impedance noise. This means that a large S-N ratio could be attained by reducing medium noise.

While we have seen technological development in reducing magnetic recording medium noise, the effects of reduced medium noise would not be enjoyed particularly in a high-density write/read system using an MR head unless the outstanding problems arising with running of magnetic tape are solved. The problems include increase of frictional coefficient, appearance of debris on the tape surface, head contamination, and head clogging. Under the present situation, however, conventional techniques have not provided satisfactory solutions.

According to the present inventors' study, it has been revealed that electromagnetic characteristics of a high-density recording system using an MR head are gradually deteriorated with repetition of running of the medium.

### SUMMARY OF THE INVENTION

An object of the present invention is to provide a magnetic recording medium free from the problems arising with running of magnetic medium particularly in a high-density recording system using an MR head, including increase of frictional coefficient, appearance of debris on the tape surface, head contamination, head clogging, and deterioration of electromagnetic characteristics, and a process of making the magnetic recording medium.

A particulate magnetic recording medium, which is brought into contact with a head and other mechanical parts, should maintain stable sliding characteristics with these elements and parts. For this purpose a compound such as a higher fatty acid or an ester thereof is incorporated into the magnetic layer or a nonmagnetic layer provided under the magnetic layer. In the case of a higher fatty acid, its carboxyl group, which is an acidic polar group, is adsorbed on the basic site of magnetic powder or nonmagnetic inorganic powder to greatly contribute to maintenance of sliding properties at relatively low sliding speeds. The compound also covers the surface of the powder to serve for improving dispersibility of the powder. However, if the magnetic or nonmagnetic inorganic powder or any other materials used to form the magnetic or nonmagnetic layer should contain small amounts of inorganic cations, cases can occur in which the high fatty acid incorporated in the layer gradually reacts with the inorganic cations to form a fatty acid metal salt during prolonged periods of storage or storage in a high temperature and humidity environment. For instance, a rare earth element, e.g., yttrium is now added to the reaction system for the formation of magnetic particles in order to prevent agglomeration of magnetic particles that have been getting smaller and smaller thereby to achieve increased density and capacity of magnetic recording media. This yttrium reacts with the fatty acid to form a fatty acid yttrium salt.

The inventors have found out that the presence of such an organic compound like the fatty acid metal salt on the surface of the magnetic layer is one cause of increase in frictional coefficient, appearance of debris on the tape surface, head contamination, and head clogging as a result of running.

The inventors have also found that the deterioration in electromagnetic characteristics with time during prolonged running is due to reduction in resistance of anMR head and that the reduction is ascribed to formation or adhesion of an electroconductive substance in near or to near the head by some cause. They have ascertained that this phenomenon can be prevented by controlling the amount of an organic compound such as a fatty acid metal salt present on the surface of the magnetic layer. The present invention has been completed based on these findings.

The present invention provides in its first aspect a magnetic recording medium including a substrate and a magnetic layer containing ferromagnetic metal powder and a binder. The ferromagnetic metal powder contains iron, cobalt, and yttrium. The ferromagnetic metal powder has a yttrium content of 2 to 20 atom% based on the total of iron and cobalt. The ferromagnetic metal powder has an average length (major axis length) of 50 nm or smaller. The magnetic recording medium has a test value of at least 100 passes in a magnetoresistive (MR) head resistance reduction test performed as follows.

A 600 m long magnetic recording medium of tape form is recorded and repeatedly reproduced while being shuttled on a drive equipped with an MR head in a 13°C, 15% RH environment until the resistance of the MR head reduces by 40 Ω. The number of passes of the tape at that time is a test value.

The invention also provides preferred embodiments of the magnetic recording medium, in which:
(1) the magnetic layer has a thickness of 100 nm or smaller;
(2) the ferromagnetic metal powder has an average breadth of 15 nm or smaller, and/or
(3) the magnetic recording medium further includes a nonmagnetic layer containing nonmagnetic powder and a binder between the substrate and the magnetic layer.

The invention also provides in its second aspect a process of producing the magnetic recording medium. The process includes the step of detecting fragment ions of an organic compound on the surface of the magnetic layer by use of a time-of-flight secondary ion mass spectrometer (TOF-SIMS).

The invention also provides preferred embodiments of the process, in which:
(1) the organic compound is a fatty acid metal salt,
(2) the fragment intensity of the fatty acid metal salt is 1% or less based on the total fragment intensity of iron and cobalt, and/or
(3) the fatty acid metal salt is a yttrium salt, and the fragment intensity of the yttrium salt is 1% or less based on the total fragment intensity of iron and cobalt.

The present invention provides a magnetic recording medium free from the problems arising with running of magnetic medium particularly in a high-density recording system using an MR head, including increase of frictional coefficient, appearance of debris on the tape surface, head contamination, head clogging, and deterioration of electromagnetic characteristics with time, and a process of making the magnetic recording medium.

### DETAILED DESCRIPTION OF THE INVENTION

The magnetic recording medium of the invention is characterized by an MR head resistance reduction test value of at least 100 passes, preferably 300 passes or more. The MR head resistance reduction test is performed as follows.
MR Head resistance reduction test method:
A 600 m long magnetic recording medium of tape form is recorded and repeatedly reproduced while being shuttled on a drive equipped with an MR head in a 13°C, 15% RH environment until the resistance of the MR head reduces by 40 Ω. The number of passes of the tape at that time is taken as a test value.

Running of a 600 m long tape from one end to the other is counted as one pass. One shuttle running operation is counted as two passes. When an MR head resistance reduction test value of a magnetic recording medium reaches 100 passes, it can be said that the phenomenon of electromagnetic characteristic deterioration with time due to running of the medium is suppressed.

As previously stated, an organic compound such as a fatty acid metal salt present on the surface of a magnetic layer is one cause of increase of frictional coefficient, appearance of debris on the tape surface, head contamination, and head clogging which occur with running of a medium. Such an organic compound is also believed to cause the deterioration in electromagnetic characteristics with time during prolonged running. Accordingly, control on the amount of an organic compound such as a fatty acid metal salt present on the magnetic layer surface is to be a solution to the above-discussed p_roblems.

In the invention, the intensity of a fragment of a fatty acid metal salt, e.g., a fatty acid yttrium salt obtained from a TOF-SIMS spectrum of the magnetic layer surface prepared using a TOF-SIMS can be used as an indicator in the quantitative control of the fatty acid metal salt on the magnetic layer surface.

The term "magnetic layer surface" as used herein with respect to TOF-SIMS denotes a very shallow region to a depth of approximately 2 to 3 nm from the measurable surface of a coating layer tested.

TOF-SIM spectrometry is well known surface analysis, and an TOF-SIM spectrometer for use in the invention is appropriately chosen from among general-purpose products. In the invention, TOF-SIMS was carried out with an ION-TOF SIMS IV instrument from ION-TOF, GmbH using Au³⁺ at a primary ion current of 0.08 pA. The magnetic surface was analyzed as such to fragment and detect a fatty acid metal salt present thereon.

As a result of study, it has been ascertained that a fragment of a fatty acid metal salt, particularly a fragment C₁₈H₃₆O₃Y, m/z=389.17 is detected. The m/z value of cobalt was 58.93, and the m/z value of the main peak of Fe was 55.93. The peak of a fragment of other fatty acid metal salts can similarly be obtained by analysis using authentic samples.

Quantification of a fatty acid metal salt by TOF-SIMS can be done by measuring the magnetic layer surface as it is as described above. TOF-SIMS allows for easy and precise quantification of a fatty acid metal salt, particularly yttrium salt, on the magnetic layer surface.

The magnetic layer surface could be pretreated with an organic solvent such as hexane to remove any fatty acid ester and unadsorbed fatty acid, care should be taken because a fatty acid metal salt to be detected can dissociate by the moisture content of the solvent.

The fragment intensity of a fatty acid metal salt on the magnetic layer surface is preferably 1% or less, still preferably 0.7% or less, even still preferably 0.5% or less, with respect to the total fragment intensity of iron and cobalt. It is particularly preferred that the fragment intensity of a fatty acid yttrium salt on the magnetic layer surface be 1% or less, still preferably 0.7% or less, even still preferably 0.5% or less, with respect to the total fragment intensity of iron and cobalt. The smaller the fragment intensity of the fatty acid metal salt, the better the head sliding properties.

The magnetic recording medium of the invention is produced by a process including at least the step of detecting fragment ions of an organic compound, particularly a fatty acid metal salt, on the surface of the magnetic layer by use of a TOF-SIMS. Although a fatty acid calcium salt forms projections on the magnetic layer surface to cause a spacing loss, which also leads to reduction of electromagnetic characteristics, a fatty acid yttrium salt is characterized by giving rise to head clogging, causing increase of dropout and error rate, and inducing MR head resistance reduction. Hence, it is preferred to detect fragment ions of a fatty acid yttrium salt in the process .

The step of detecting fragment ions of a fatty acid metal salt on the magnetic layer surface may be performed in any stage after the formation of a magnetic layer but is preferably effected at least in or after the final stage of magnetic recording medium production. TOF-SIMS surface analysis in or after the final stage of production provides data for removing defective products before shipment and also provides feedback about the material composition and processing conditions in the previous steps thereby to maintain constant product qualities.

The following is illustrative examples of means that can be combined with each other appropriately to achieve control of the amount of a fatty acid metal salt.
(1) To treat the ferromagnetic powder with a surface treating agent such as phenylphosphonic acid.
(2) To reduce the amount of a vinyl chloride resin that accelerates ionization of ferromagnetic metal powder.
(3) To adjust the kind and amount of a functional group of a binder resin used to disperse the ferromagnetic metal powder.
(4) To avoid excessive dispersion of the ferromagnetic metal powder.
(5) To reduce the amount of a salt-forming atom such as yttrium contained in the ferromagnetic metal powder.
(6) To reduce the alkali and alkaline earth metal content in the ferromagnetic powder or inorganic nonmagnetic powder.
(7) To control the amount of a fatty acid ester that may be used in the magnetic layer or a lower nonmagnetic layer and can migrate to the surface of the medium to form a fatty acid metal salt.
(8) To suppress migration of the fatty acid ester during drying.
(9) To reduce the fatty acid ester on the magnetic layer surface by surface smoothing under heat.
(10) To add carbon black to the magnetic layer or a lower nonmagnetic layer as long as the electric and surface properties of the medium are not impaired, so that the fatty acid ester may be adsorbed onto the carbon black to be reduced on the magnetic layer surface.
(11) To adjust the kind, amount, and grain size of the abrasive used in the magnetic layer.
(12) To clean the magnetic tape surface to reduce the surface metal salt.

The substrate that can be used in the invention is a nonmagnetic substrate and is preferably a film of polyester composed of a dicarboxylic acid component and a diol component, such as polyethylene terephthalate and polyethylene naphthalate.

Examples of dicarboxylic acids that are suitable as a main dicarboxylic acid component are terephthalic acid, isophthalic acid, phthalic acid, 2,6-naphthalenedicarboxylic acid, 2,7-naphthalenedicarboxylic acid, diphenylsulfonedicarboxylic acid, diphenyl ether dicarboxylic acid, diphenylethanedicarboxylic acid, cyclohexanedicarboxylic acid, diphenyldicarboxylic acid, diphenyl thioether dicarboxylic acid, diphenyl ketone dicarboxylic acid, and phenylindane dicarboxylic acid.

Examples of the diol component include ethylene glycol, propylene glycol, tetramethylene glycol, cyclohexanedimethanol, 2,2-bis(4-hydroxyphenyl)propane, 2,2-bis(4-hydroxyethoxyphenyl)propane, bis(4-hydroxyphenyl)sulfone, bisphenolfluorene dihydroxyethyl ether, diethylene glycol, neopentyl glycol, hydroquinone, and cyclohexanediol.

Of these polyesters preferred are those composed of terephthalic acid and/or 2,6-naphthalenedicarboxylic acid as a main dicarboxylic acid component and ethylene glycol and/or 1,4-cyclohexanedimethanol as a main diol component for their transparency, mechanical strength, and dimensional stability.

Still preferred are polyesters containing polyethylene terephthalate or polyethylene 2,6-naphthalate as a main constituent, co-polyesters composed of terephthalic acid, 2,6-naphthalenedicarboxylic acid, and ethylene glycol, and polyblends mainly of two or more of these polyesters . Particularly preferred are polyesters containing polyethylene 2,6-naphthalate as a main constituent.

The polyester substrate may be a biaxially film or a laminate film.

The polyester may contain an additional component as a comonomer or an additional polyester. Such an additional component or polyester can be chosen from the above recited dicarboxylic acid components, diol components, and polyesters prepared therefrom.

To provide a polyester substrate resistant to delamination, the polyester may have another component copolymerized, such as an aromatic dicarboxylic acid having a sulfonate group or an ester-forming derivative thereof, a dicarboxylic acid having a polyoxyalkylene group or an ester-forming derivative thereof, or a diol having a polyoxyalkylene group.

From the perspective of copolymerizability in the preparation of polyester and transparency of the resulting film, preferred of the comonomer components recited above are 5-sodium sulfoisophthalic acid, 2-sodium sulfoterephthalic acid, 4-sodium sulfophthalic acid, 4-sodium sulfo-2,6-naphthalenedicarboxylic acid, their analogues with sodium replaced by other metal (e.g., potassium or lithium), an ammonium salt, a phosphonium salt, etc., and ester-forming derivatives of these compounds; polyethylene glycol, polytetramethylene glycol, a polyethylene glycol-polypropylene glycol copolymer, and the recited diol compounds with the hydroxyl group at both terminals thereof converted to a carboxyl group by, for example, oxidation. The amount of the comonomer component used for the purpose described is preferably 0.1 to 10 mol% based on the dicarboxylic acid component constituting the polyester.

To provide a polyester substrate with improved heat resistance, the polyester may have a bisphenol compound or a compound having a naphthalene or cyclohexane ring copolymerized in an amount preferably of 1 to 20 mol% based on the dicarboxylic acid component constituting the polyester.

The process of synthesizing the polyester used in the invention is not particularly limited. A known technique can be followed, including a direct esterification process in which a dicarboxylic acid component and a diol component are directly subjected to esterification and an interesterification process in which a dialkyl ester as a dicarboxylic acid component is interesterified with a diol component, and the reaction mixture is heated under reduced pressure to remove excess diol. If desired, a catalyst for interesterification or polymerization or a heat stabilizer may be added to the reaction system.

One or more additives may be added to the reaction system in an appropriate stage of synthesis. The additives include anti-coloring agents, antioxidants, nucleating agents, slip agents, stabilizers, anti-blocking agents, UV absorbers, viscosity modifiers, antifoam clarifiers, antistatic agents, pH adjusters, dyes, pigments, and terminators.

A filler may be added to the polyester. Types of the filler includes inorganic powders, such as spherical silica, colloidal silica, titanium oxide, and alumina; and organic powders, such as crosslinked polystyrene and silicone resin.

The thickness of the nonmagnetic polyester substrate is preferably 3 to 80 µm, still preferably 3 to 50 µm, even still preferably 3 to 10 µm. The surface of the nonmagnetic substrate preferably has a roughness average (SRa; arithmetic average deviation from mean line) of 8 nm or less, still preferably 6 nm or less, as measured with TOPO-3D from Wyko.

The magnetic recording medium of the invention has a magnetic layer containing a ferromagnetic metal powder dispersed in a binder on the nonmagnetic substrate. The magnetic recording medium of the invention can further has a nonmagnetic layer (lower layer) that is substantially nonmagnetic provided between the nonmagnetic substrate and the magnetic layer.

In addition to the essential ferromagnetic metal powder, the medium may further contain ferromagnetic hexagonal ferrite powder or ferromagnetic iron nitride basedpowder either in the same layer as the ferromagnetic metal powder-containing magnetic layer or in an independent magnetic layer.

The ferromagnetic metal powder preferably has a volume of 100 to 8,000 nm³, still preferably 500 to 8, 000 nm³, per particle. With the particle size falling within that range, reduction of magnetic characteristics due to thermal fluctuations is minimized effectively, and a good C/N (S/N) is obtained while securing low noise.

The size of magnetic powder can be determined as follows. An appropriate amount of the magnetic layer is stripped off a magnetic recording medium. In a glass tube are put 30 to 70 mg of the stripped magnetic layer and n-butylamine. The glass tube is sealed and set in a pyrolyzer and heated at 160°C for about 14 hours. After cooling, the contents are taken out from the glass tube and separated into liquid and solid by centrifugation. The solid is washed with acetone to obtain a powder sample for TEM. The particles of the sample are photographed by a transmission electron microscope H-9000 from Hitachi, Ltd. at a magnification of 100, 000 and printed on photographic paper to a total magnification of 500, 000. Objective magnetic particles are selected from the micrograph, the contour of the particles is traced with a digitizer, and the size of each particle is measured with image analysis software KS-400 from Carl Zeiss. Five hundred particles are measured to obtain an average particle size.

The particle size of magnetic or nonmagnetic powders used in the invention is represented by (1) the length (or major axis length) where a particle is needle-shaped, spindle-shaped or columnar (with the height greater than the maximum diameter of the base), (2) the length (or a maximum diameter) of a main plane or a base where a particle is platy or columnar (with the thickness or height smaller than the maximum diameter of the base), or (3) a circle equivalent diameter where a particle is spherical, polyhedral or amorphous and has no specific major axis. The "circle equivalent diameter" is calculated from a projected area.

The average particle size of powder is an arithmetic average calculated from the particle sizes of 500 primary particles measured as described above. The term "primary particles" denotes particles dependent of each other without agglomeration.

The term "average aspect ratio" of powder particle is an arithmetic average of length/breadth (or major axis length/minor axis length) ratios of particles defined in (1) above or an arithmetic average of length/thickness (or maximum diameter/thickness) ratios of particles defined in (2) above. Particles defined in (3) above, having no distinction between major and minor axes, are regarded to have an aspect ratio of 1 for the sake of convenience.

The average particle size of particles defined in (1) and (2) above can also be referred to as an average length, and that of particles defined in (3) can also be referred to as an average diameter. The term "variation coefficient" with reference to particle sizes is defined to be a percentage of standard deviation to average.

The ferromagnetic metal powder that can be used in the magnetic layer contains Fe, inclusive of an Fe alloy, as a main ingredient and further contains cobalt and yttrium. The yttrium content is 2 to 20 atom% based on the total of iron and cobalt. The ferromagnetic metal powder may contain, in addition to the recited elements, A1, Si, S, Sc, Ca, Ti, V, Cr, Cu, Mo, Rh, Pd, Ag, Sn, Sb, Te, Ba, Ta, W, Re, Au, Hg, Pb, Bi, La, Ce, Pr, Nd, P, Mn, Zn, Ni, Sr, B, etc. Ferromagnetic metal powders containing at least one of Al, Si, Ca, Ba, La, Nd, Ni, and B in addition to Fe, Co and Y, particularly those containing Co, Al, and Y in addition to Fe are preferred. More specifically, a preferred cobalt content and aluminum content are 10 to 40 atom% and 2 to 20 atom%, respectively, based on Fe.

The ferromagnetic metal powder may previously be treated with a dispersant, a lubricant, a surface active agent, an antistatic agent, etc. (described later) before being dispersed. The ferromagnetic metal powder may contain a small amount of water, a hydroxide or an oxide. The water content of the ferromagnetic metal powder preferably ranges from 0.01% to 2% by weight. The water content of the ferromagnetic metal powder is preferably optimized according to the kind of the binder to be combined with. The void of the ferromagnetic metal powder is preferably as small as possible. The void is preferably 20% by volume or less, still preferably 5% by volume or less.

The ferromagnetic metal powder has an average particle length of 50 nm or smaller, preferably 20 to 50 nm, still preferably 30 to 50 nm.

The ferromagnetic metal powder preferably has a crystallite size of 8 to 20 nm, still preferably 10 to 18 nm, even still preferably 12 to 16 nm. The crystallite size is an average calculated from a half value width of the X-ray diffraction peak by Scherrer's formula. X-Ray diffractometry is carried out using RINT 2000 from Rigaku Co., Ltd. equipped with a CuKα1 ray source at a tube voltage of 50 kV and a tube current of 300 mA.

The ferromagnetic metal powder preferably has a BET specific surface area (S_{BET}) of 50 m²/g or more, still preferably 55 to 100 m²/g, even still preferably 60 to 80 m²/g, so as to secure both satisfactory surface properties and low noise. The pH of the ferromagnetic metal powder, which is preferably optimized according to the kind of the binder to be combined with, usually ranges from 4 to 12, preferably 7 to 10. If desired, the ferromagnetic metal powder can be surface treated with 0.1% to 10% by weight, based on the ferromagnetic metal powder, of Al, Si, P or an oxide thereof, whereby adsorption of a lubricant, such as a fatty acid, is controlled not to exceed 100 mg/m². The ferromagnetic metal powder may contain inorganic soluble ions, such as Na, Ca, Fe, Ni, and Sr ions. While the absence of such ions is essentially desirable, presence of up to about 200 ppm of such ions is little influential on the characteristics.

The ferromagnetic metal powder can have an acicular shape, a spindle shape, a platy shape or any other general shape as long as the particle volume falls within the above-specified ranges. Acicular ferromagnetic metal particles are preferred. Acicular ferromagnetic metal particles preferably have an average aspect ratio of 2 to 12, still preferably 4 to 12. The ferromagnetic metal powder preferably has a coercive force Hc of 159.2 to 238.8 kA/m (2000 to 3000 Oe), still preferably 167.2 to 230.8 kA/m (2100 to 2900 Oe), a saturation flux density of 150 to 300 mT (1500 to 3000 G), still preferably 160 to 290 mT, and a saturation magnetization σs of 140 to 170 A·m²/kg (140 to 170 emu/g), still preferably 145 to 160 A·m²/kg. The SFD (switching field distribution) of the magnetic powder itself is preferably as small as possible. A preferred SFD is 0.8 or smaller. Ferromagnetic metal powder having an SFD of 0.8 or smaller shows good electromagnetic characteristics, high output, and a sharp magnetization reversal with a small peak shift, which is advantageous for high density digital magnetic recording. The coercivity distribution can be narrowed by, for example, using goethite with a narrow size distribution, using monodisperse α-Fe₂O₃ particles, or preventing sintering of particles in the preparation of the ferromagnetic metal powder.

The ferromagnetic metal powder can be prepared by known processes, such as reduction of hydrated iron oxide having been treated for sintering prevention or iron oxide with a reducing gas (e.g., hydrogen) into Fe or Fe-Co particles; reduction using a composite organic acid salt (mainly an oxalate) and a reducing ga's (e.g., hydrogen); pyrolysis of a metal carbonyl compound; reduction of a ferromagnetic metal in the form of an aqueous solution by adding a reducing agent (e.g., sodium borohydride, a hypophosphite or hydrazine); and vaporization of a metal in a low-pressure inert gas. The resulting ferromagnetic metal powder may be subjected to a known slow oxidation treatment. For example, ferromagnetic metal powder obtained by reducing hydrated iron oxide or iron oxide with a reducing gas, such as hydrogen, is treated in an atmosphere having a controlled oxygen to inert gas ratio at a controlled temperature for a controlled time to form an oxide film on its surface. This slow oxidation technique is preferred to reduce involvement of demagnetization.

Binders useful in the magnetic layer include known thermoplastic resins, thermosetting resins, reactive resins, and mixtures thereof. Examples of the thermoplastic resins include homo- or copolymers containing a unit derived from vinyl chloride, vinyl acetate, vinyl alcohol, maleic acid, acrylic acid, an acrylic ester, vinylidene chloride, acrylonitrile, methacrylic acid, a methacrylic ester, styrene, butadiene, ethylene, vinyl butyral, vinyl acetal or a vinyl ether; polyurethane resins, and various types of rubber resins.

Examples of useful thermosetting or reactive resins include phenolic resins, epoxy resins, thermosetting polyurethane resins, urea resins, melamine resins, alkyd resins, reactive acrylic resins, formaldehyde resins, silicone resins, epoxy-polyamide resins, polyester resin/isocyanate prepolymer mixtures, polyester polyol/polyisocyanate mixtures, and polyurethane/polyisocyanatemixtures. For the details of these binder resins, Plastic Handbook published by Asakura Shoten can be referred to.

Electron beam (EB) curing resins are also useful as a binder. Use of an EB curing resin in the magnetic layer brings about improvement in coating film strength, which leads to improved durability, and improvement in surface smoothness, which leads to improved electromagnetic characteristics. The details of the EB curing resins and methods of producing them are described in JP-A 62-256219.

The above-described binder resins can be used either individually or as a combination thereof. Use of a polyurethane resin is preferred. Examples of preferred polyurethane resins include a polyurethane resin (A) which is prepared by reacting (A-1) a polyol containing a cyclic structure (e.g., hydrogenated bisphenol A or hydrogenated bisphenol A polypropylene oxide adduct) and an alkylene oxide chain and having a molecular weight of 500 to 5000, (A-2) a polyol having a cyclic structure and a molecular weight of 200 to 500 that serves as a chain extender, and (A-3) an organic diisocyanate and which contains a polar group; a polyurethane resin (B) which is prepared by reacting (B-1) a polyester polyol composed of an aliphatic dibasic acid component (e.g., succinic acid, adipic acid or sebacic acid) and an aliphatic diol component having a branched alkyl side chain and containing no cyclic structure (e.g., 2,2-dimethyl-1,3-propanediol, 2-ethyl-2-butyl-1,3-propanediol, or 2,2-diethyl-1,3-propanediol), (B-2) an aliphatic diol having a branched alkyl side chain containing 3 or more carbon atoms and serving as a chain extender (e.g., 2-ethyl-2-butyl-1,3-propanediol or 2,2-diethyl-1,3-propanediol), and (B-3) an organic diisocyanate and which contains a polar group; and (C) a polyurethane resin which is prepared by reacting (C-1) a polyol compound having a cyclic structure and an alkyl chain containing 2 or more carbon atoms (e.g., dimer diol) and (C-2) an organic diisocyanate and which contains a polar group.

The polar group-containingpolyurethane resin that can be used in the invention preferably has an average molecular weight of 5, 000 to 100,000, still preferably 10,000 to 50,000. With the average molecular weight of 5,000 or more, the resulting coating film has sufficient physical strength to secure durability of the magnetic recording medium. With the average molecular weight of 100,000 or less, the binder resin has sufficient solvent solubility and therefore satisfactory dispersing capabilities to provide a coating dispersion with a moderate viscosity at a predetermined concentration for good workability and easy handling.

Examples of the polar group of the polyurethane resin include -COOM, -SO₃M, -OSO₃M, -P=O(OM)₂, -O-P=O(OM)₂ (wherein M is a hydrogen atom or an alkali metal base), -OH, -NR₂, -N⁺R₃ (wherein R is a hydrocarbon group), an epoxy group, -SH, -CN, and so forth. One of more of these polar groups can be incorporated through copolymerization or addition reaction. Where the polar group-containing polyurethane resin has an OH group, the OH group is preferably a branched OH group from the view point of curability and durability. It is preferred for the resin to have 2 to 40, still preferably 3 to 20, branched OH groups per molecule. The amount of the polar group in the polar group-containing polyurethane resin is 10⁻¹ to 10⁻⁸ mol/g, preferably 10⁻² to 10⁻⁶ mol/g.

Examples of commercially available binder resins useful in the invention are VAGH, VYHH, VMCH, VAGF, VAGD, VROH, VYES, VYNC, VMCC, XYHL, XYSG, PKHH, PKHJ, PKHC, and PKFE (from Union Carbide Corp.); MPR-TA, MPR-TA5, MPR-TAL, MPR-TSN, MPR-TMF, MPR-TS, MPR-TM, and MPR-TAO (fromNisshin Chemical Industry Co., Ltd.); 1000W, DX80, DX81, DX82; DX83, and 100FD (from Denki Kagaku Kogyo K.K.); MR-104, MR-105, MR110 , MR100, MR555, and 400X-110A (from Zeon Corp.); Nipporan N2301, N2302, and N2304 (from Nippon Polyurethane Industry Co., Ltd.); Pandex T-5105, T-R3080, and T-5201, Barnock D-400 and D-210-80, and Crisvon 6109 and 7209 (from Dainippon Ink & Chemicals, Inc.); Vylon UR8200, UR8300, UR-8700, RV530, andRV280 (from Toyobo Co., Ltd.); Daiferamin 4020, 5020, 5100, 5300, 9020, 9022, and 7020 (from Dainichiseika Color & Chemicals Mfg. Co., Ltd.); MX5004 (from Mitsubishi Chemical Corp.); Sanprene SP-150 (from Sanyo Chemical Industries, Ltd.); and Saran F310 and F210 (from Asahi Chemical Industry Co., Ltd.).

The amount of the binder in the magnetic layer is 5% to 50% by weight, preferably 10% to 30% by weight, based on the ferromagnetic metal powder. Where a polyurethane resin, polyisocyanate, and a vinyl chloride resin are used in combination, their amounts are preferably selected from a range of 2% to 20% by weight, a range of 2% to 20% by weight, and a range of 5% to 30% by weight, respectively. In case where head corrosion by a trace amount of released chlorine is expected to occur, polyurethane alone or a combination of only polyurethane and polyisocyanate can be used. The polyurethane resin to be used preferably has a glass transition temperature Tg of -50° to 150°C, preferably 0° to 100°C, an elongation at break of 100% to 2000%, a stress at rupture of 0.49 to 98 Mpa (0.05 to 10 kg/mm²), and a yield point of 0.49 to 98 Mpa (0.05 to 10 kg/mm²).

In the case where the magnetic recording medium of the invention is a flexible disk, it can have at least two layers, the lower nonmagnetic layer and the upper magnetic layer, on each side of the substrate. These layers can have different binder formulations in terms of the binder content, the proportions of a vinyl chloride resin, a polyurethane resin, polyisocyanate, and other resins, the molecular weight of each resin, the amount of the polar group introduced, and other physical properties of the resins. It is rather desirable to optimize the binder design for each layer. For the optimization, known techniques relating to a nonmagnetic/magnetic multilayer structure can be utilized. For example, to increase the binder content of the magnetic layer is effective to reduce scratches on the magnetic layer, or to increase the binder content of the nonmagnetic layer is effective to increase flexibility thereby to smooth head touch.

Examples of the polyisocyanate that can be used in the binder formulation includestolylenediisocyanate, 4,4'-diphenylmethane diisocyanate, hexamethylene diisocyanate, xylylene diisocyanate, naphthylene-1,5-diisocyanate, o-toluidine diisocyanate, isophorone diisocyanate, and triphenylmethane triisocyanate. Further included are reaction products between these isocyanate compounds and polyols and polyisocyanates produced by condensation of the isocyanates. Examples of commerciallyavailable polyisocyanates useful in the invention are Coronate L, Coronate HL, Coronate 2030, Coronate 2031, Millionate MR, and Millionate MTL from Nippon Polyurethane Industry Co., Ltd.; Takenate D-102, Takenate D-110N, Takenate D-200, and Takenate D-202 from Takeda Chemical Industries, Ltd.; and Desmodur L, Desmodur IL, Desmodur N, and Desmodur HL from Sumitomo Bayer Urethane Co., Ltd. They can be used in each layer, either alone or as a combination of two or more thereof taking advantage of difference in curing reactivity.

The magnetic layer can contain additives, such as abrasives, lubricants, dispersing agents or dispersing aids, antifungals, antistatics, antioxidants, solvents, and carbon black, according to necessity. Examples of such additives include molybdenum disulfide, tungsten disulfide, graphite, boron nitride, graphite fluoride, silicone oils, polar group-containing silicones, fatty acid-modified silicones, fluorine-containing silicones, fluorine-containing alcohols, fluorine-containing esters, polyolefins, polyglycols, polyphenyl ethers; aromatic ring-containing organic phosphonic acids, such as phenylphosphonic acid, benzylphosphonic acid, phenethylphosphonic acid, α-methylbenzylphosphonic acid, 1-methyl-1-phenethylphosphonic acid, diphenylmethylphosphonic acid, biphenylphosphonic acid, benzylphenylphosphonic acid, α-cumylphosphonic acid, toluylphosphonic acid, xylylphosphonic acid, ethylphenylphosphonic acid, cumenylphosphonic acid, propylphenylphosphonic acid, butylphenylphosphonic acid, heptylphenylphosphonic acid, octylphenylphosphonic acid, and nonylphenylphosphonic acid, and alkali metal salts thereof; alkylphosphonic acids, such as octylphosphonic acid, 2-ethylhexylphosphonic acid, isooctylphosphonic acid, isononylphosphonic acid, isodecylphosphonic acid, isoundecylphosphonic acid, isododecylphosphonic acid, isohexadecylphosphonic acid, isooctadecylphosphonic acid, and isoeicosylphosphonic acid, and alkali metal salts thereof; aromatic phosphoric acid esters, such as phenyl phosphate, benzyl phosphate, phenethyl phosphate, α-methylbenzyl phosphate, 1-methyl-1-phenethyl phosphate, diphenylmethyl phosphate, biphenyl phosphate, benzylphenylphosphate, α-cumyl phosphate, toluyl phosphate, xylyl phosphate, ethylphenyl phosphate, cumenyl phosphate, propylphenyl phosphate, butylphenyl phosphate, heptylphenyl phosphate, octylphenyl phosphate, and nonylphenyl phosphate, and alkali metal salts thereof; alkyl phosphates, such as octyl phosphate, 2-ethylhexyl phosphate, isooctyl phosphate, isononyl phosphate, isodecyl phosphate, isoundecyl phosphate, isododecyl phosphate, isohexadecyl phosphate, isooctadecyl phosphate, and isoeicosyl phosphate, and alkali metal salts thereof; alkylsulfonic esters and alkali metal salts thereof; fluorine-containing alkylsulfuric esters and alkali metal salts thereof; monobasic fatty acids having 10 to 24 carbon atoms, either saturated or unsaturated and straight chain or branched, such as lauric acid, myristic acid, palmitic acid, stearic acid, behenic acid, oleic acid, linoleic acid, linolenic acid, elaidic acid, and erucic acid, and metal salts thereof; mono-, di- or higher esters of fatty acids prepared between monobasic fatty acids having 10 to 24 carbon atoms, either saturated or unsaturated and straight-chain or branched, and mono- to hexahydric alcohols having 2 to 22 carbon atoms (either saturated or unsaturated and straight-chain or branched), alkoxyalcohols having 12 to 22 carbon atoms (either saturated or unsaturated and straight-chain or branched) or monoalkyl ethers of alkylene oxide polymers, such as butyl stearate, octyl stearate, amyl stearate, isooctyl stearate, octyl myristate, butyl laurate, butoxyethyl stearate, anhydrosorbitol monostearate, and anhydrosorbitol tristearate; fatty acid amides having 2 to 22 carbon atoms; and aliphatic amines having 8 to 22 carbon atoms. The alkyl, aryl or aralkyl moiety of the above-recited additive compounds may be replaced with a nitro group, a halogen atom (e.g., F, Cl or Br), a halogenated hydrocarbon group (e.g., CF₃, CCl₃ or CBr₃) or a like substituent.

Examples of surface active agents that can be used as additives include nonionic ones, such as alkylene oxide types, glycerol types, glycidol types, and alkylphenol ethylene oxide adducts; cationic ones, such as cyclic amines, ester amides, quaternary ammonium salts, hydantoin derivatives, heterocyclic compounds, phosphonium salts, and sulfonium salts; anionic ones containing an acidic group, such as a carboxyl group, a sulfonic acid group or a sulfuric ester group; and amphoteric ones, such as amino acids, aminosulfonic acids, amino alcohol sulfuric or phosphoric esters, and alkyl betaines. For the details of the surface active agents, refer to Kaimen Kasseizai Binran published by Sangyo Tosho K.K.

The above-described lubricants, antistatic agents, and like additives do not always need to be 100% pure and may contain impurities, such as isomers, unreacted materials, by-products, decomposition products, and oxides. The proportion of the impurities is preferably 30% by weight at the most, still preferably 10% by weight or less.

Specific examples of the additives are NAA-102, hardened castor oil fatty acids, NAA-42, Cation SA, Nymeen L-201, Nonion E-208, Anon BF, and Anon LG (all available from NOF Corp.); FAL 205 and FAL 123 (from Takemoto Yushi K.K.); Enujelv OL (fromNew Japan Chemical Co., Ltd.), TA-3 (from Shin-Etsu Chemical Industry Co. , Ltd.), Armid P (from Lion Akzo Co., Ltd.), Duomeen TDO (from Lion Corp.), BA 41G (fromNisshin Oil Mills, Ltd.); and Profan 2012E, Newpol PE 61, and Ionet MS400 (from Sanyo Chemical Industries, Ltd.).

If desired, the magnetic layer can contain carbon black. Types of carbon black that can be used in the magnetic layer include furnace black for rubber, thermal black for rubber, carbon black for color, and acetylene black. The carbon black preferably has a specific surface area of 5 to 500 m²/g, a dibutyl phthalate (DBP) absorption of 10 to 400 ml/100 g, an average particle size of 5 to 300 nm, a pH of 2 to 10, a water content of 0.1% to 10% by weight, and a tap density of 0.1 to 1 g/ml.

Examples of commercially available carbon black products that can be used in the invention include Black Pearls 2000, 1300, 1000, 900, 905, 800, and 700 and Vulcan XC-72 (from Cabot Corp.); #80, #60, #55, #50, and #35 (from Asahi Carbon Co., Ltd.); #2400B, #2300, #900, #1000, #30, #40, and #10B (from Mitsubishi Chemical Corp.); Conductex SC, RAVEN 150, 50, 40 and 15, and RAVEN-MT-P (from Columbian Carbon) ; andKetjenBlackEC (from Ketjen Black International Company). Carbon black having been surface treated with a dispersant, etc., resin-grafted carbon black, or carbon black with its surface partially graphitized may be used. Carbon black may previously been dispersed in a binder before being added to a coating composition for magnetic layer formation. The above-enumerated carbon black species can be used either alone or as a combination thereof. Carbon black can be used in an amount of 0.1% to 30% by weight based on the magnetic powder. Carbon black serves for antistatic control, reduction of frictional coefficient, reduction of light transmission, film strength enhancement, and the like. These functions depend on the species. Accordingly, it is understandably possible, or rather desirable, to optimize the kinds, amounts, and combinations of the carbon black species for each layer according to the intended purpose with reference to the above-mentioned characteristics including particle size, DBP absorption, conductivity, pH, and so forth. In selecting carbon black species for use in the magnetic layer, reference can be made, e.g., to Carbon Black Kyokai (ed.), Carbon Black Binran*.*

Organic solvents known in the art can be used in the preparation of coating compositions for the magnetic or nonmagnetic layers. Typical examples of the solvents include ketones, such as acetone, methyl ethyl ketone, methyl isobutyl ketone, diisobutyl ketone, cyclohexanone, isophorone, and tetrahydrofuran; alcohols, such as methanol, ethanol, propanol, butanol, isobutyl alcohol, isopropyl alcohol, and methylcyclohexanol; esters, such as methyl acetate, butyl acetate, isobutyl acetate, isopropyl acetate, ethyl lactate, and glycol acetate; glycol ethers, such as glycol dimethyl ether, glycol monoethyl ether, and dioxane; aromatichydrocarbons, such as benzene, toluene, xylene, cresol, and chlorobenzene; chlorinated hydrocarbons, such as methylene chloride, ethylene chloride, carbon tetrachloride, chloroform, ethylenechlorohydrin, and dichlorobenzene; N,N-dimethylformamide; and hexane. They can be used either alone or as a mixture at any mixing ratio.

The organic solvent does not always need to be 100% pure and may contain impurities, such as isomers, unreacted matter, by-products, decomposition products, oxidation products, and water. The impurity content is preferably 30% or less, still preferably 10% or less. The organic solvent used in the formation of the magnetic layer and that used in the formation of the nonmagnetic layer are preferably the same in kind but may be different in amount. It is advisable to use a solvent with high surface tension (e.g., cyclohexanone or dioxane) in the formation of the nonmagnetic layer to improve coating stability. Specifically, it is important that the arithmetic mean of the surface tensions of the solvents for the upper magnetic layer be equal to or lower than that for the lower nonmagnetic layer. A solvent with somewhat high polarity is preferred for improving dispersing capabilities for powders. In this connection, the solvent system preferably contains at least 50% of a solvent having a dielectric constant of 15 or higher. The solubility parameter of the solvent or the solvent system is preferably 8 to 11.

The kinds and amounts of the above-described dispersing agents, lubricants or surface active agents to be used can be decided as appropriate to the character of the layer to which they are added. The following is a few illustrative examples of manipulations using these additives. (i) A dispersing agent has a property of being adsorbed or bonded to fine solid particles via its polar groups. It is adsorbed or bonded via the polar groups mostly to the surface of ferromagnetic metal powder when used in a magnetic layer or the surface of nonmagnetic powder in a nonmagnetic layer. It is assumed that, after once being adsorbed to metal or metal compound particles, an organophosphorus compound, for instance, is hardly desorbed therefrom. As a result, the ferromagnetic metal powder or nonmagnetic powder treated with a dispersing agent appears to be covered with an alkyl group, an aromatic group or the like, which makes the particles more compatible with a binder resin component and more stable in their dispersed state. (ii) Since lubricants exist in a free state, bleeding of lubricants is controlled by using fatty acids differing in melting points between the magnetic layer and the nonmagnetic layer or by using esters different in boiling point or polarity between the magnetic layer and the nonmagnetic layer. (iii) Coating stability is improved by adjusting the amount of the surface active agent. (iv) The amount of the lubricant in the nonmagnetic layer is increased to improve the lubricating effect.

All or part of the additives can be added at any stage of preparing the magnetic or nonmagnetic coating composition for the formation of the magnetic or nonmagnetic layer. For example, the additives can be blended with the ferromagnetic powder before kneading, or be mixed with the ferromagnetic powder, a binder, and a solvent in the step of kneading, or be added during or after the step of dispersing or immediately before coating.

The nonmagnetic layer that may be provided between the substrate and the magnetic layer contains a nonmagnetic powder and a binder. The nonmagnetic powder may be either organic or inorganic. If desired, the nonmagnetic layer may contain carbon black in addition to the nonmagnetic powder. Types of the inorganic nonmagnetic materials include metals, metal oxides, metal carbonates, metal sulfates, metal nitrides, metal carbides, and metal sulfides.

Examples of the inorganic nonmagnetic materials include titanium oxides (e.g., titanium dioxide), cerium oxide, tin oxide, tungsten oxide, ZnO, ZrO₂, SiO₂, Cr₂O₃, α-alumina having an α-phase content of 90% to 100%, β-alumina, γ-alumina, α-iron oxide, goethite, corundum, silicon nitride, titanium carbide, magnesium oxide, boron nitride, molybdenum disulfide, copper oxide, MgCO₃, CaCO₃, BaCO₃, SrCO₃, BaSO₄, silicon carbide, and titanium carbide. They can be used either individually or in combination. Preferred among them are α-iron oxide and titanium oxide.

The shape of the nonmagnetic powder particles may be any of acicular, spherical, polygonal, and platy shapes. The crystallite size of the nonmagnetic powder is preferably 4 nm to 1 µm, still preferably 20 to 100 nm. Particles with the crystallite size ranging from 4 nm to 1 µm provide appropriate surface roughness while securing dispersibility. The nonmagnetic powder preferably has an average particle size of 5 nm to 2 µm. In this preferred range of an average particle size, the particles are satisfactorily dispersible and provide appropriate surface roughness. If desired, nonmagnetic powders different in average particle size may be used in combination, or a single kind of a nonmagnetic powder having a broadened size distribution maybe used to produce the same effect. A still preferred particle size of the nonmagnetic powder is 10 to 200 nm.

The specific surface area of the nonmagnetic powder preferably ranges from 1 to 100 m²/g, still preferably 5 to 70 m²/g, even still preferably 10 to 65 m²/g. In the preferred specific surface area range, the nonmagnetic powder provides appropriate surface roughness and is dispersible in a desired amount of a binder. The DBP absorption of the powder is preferably 5 to 100 ml/100 g, still preferably 10 to 80 ml/100 g, even still preferably 20 to 60 ml/100 g. The specific gravity of the powder is preferably 1 to 12, still preferably 3 to 6. The tap density of the powder is preferably 0.05 to 2 g/ml, still preferably 0.2 to 1.5 g/ml. Having the tap density falling within that range, the powder is easy to handle with little dusting and tends to be less liable to stick to equipment. The nonmagnetic powder preferably has a pH of 2 to 11, still preferably between 6 and 9. With the pH ranging between 2 and 11, an increase in frictional coefficient of the magnetic recording medium experienced in a high temperature and humidity condition or due to release of a fatty acid can be averted. The water content of the nonmagnetic powder is preferably 0.1% to 5% by weight, still preferably 0.2% to 3% by weight, even still preferably 0.3% to 1 . 5% by weight. Within the preferred water content range, the powder is easy to disperse, and the resulting coating composition has a stable viscosity. The ignition loss of the powder is preferably not more than 20% by weight. The smaller the ignition loss, the better.

The inorganic nonmagnetic powder preferably has a Mohs hardness of 4 to 10 to secure durability. The nonmagnetic powder preferably has a stearic acid adsorption of 1 to 20 µmol/m², still preferably 2 to 15 µmol/m². The heat of wetting of the nonmagnetic powder with water at 25°C is preferably 200 to 600 erg/m² (200 to 600 mJ/cm²). Solvents in which the nonmagnetic powder releases the recited heat of wetting can be used. The number of water molecules on the nonmagnetic powder at 100° to 400°C is suitably 1 to 10 per 10 nm. The isoelectric point of the nonmagnetic powder in water is preferably pH 3 to 9.

It is preferred that the nonmagnetic powder be surface treated to have a surface layer of Al₂O₃, SiO₂, TiO₂, ZrO₂, SnO₂, Sb₂O₃, or ZnO. Among them, preferred for dispersibility are Al₂O₃, SiO₂, TiO₂, and ZrO₂, with Al₂O₃, SiO₂, and ZrO₂ being still preferred. These surface treating substances may be used either individually or in combination. According to the purpose, a composite surface layer can be formed by co-precipitation or a method comprising first applying alumina to the nonmagnetic particles and then treating with silica or *vise versa.* The surface layer may be porous for some purposes, but a homogeneous and dense surface layer is usually preferred.

Specific examples of commercially available nonmagnetic powders that can be used in the nonmagnetic layer include Nanotite from Showa Denko K.K.; HIT-100 and ZA-G1 from Sumitomo Chemical Co., Ltd.; DPN-250, DPN-250BX, DPN-245, DPN-270BX, DPB-550BX, and DPN-550RX from Toda Kogyo Corp.; titanium oxide series TTO-51B, TTO-55A, TTO-55B, TTO-55C, TTO-55S, andTTO-55D, SN-100, MJ-7, and α-iron oxide series E270, E271, and E300 from Ishihara Sangyo Kaisha, Ltd.; STT-4D, ST-30D, STT-30, and STT-65C from Titan Kogyo K.K.; MT-100S, MT-100T, MT-150W, MT-500B, MT-600B, T-100F, and T-500HD from Tayca Corp.; FINEX-25, BF-1, BF-10, BF-20, and ST-M from Sakai Chemical Industry Co., Ltd.; DEFIC-Y and DEFIC-R from Dowa Mining Co . , Ltd. ; AS2BM and TiO2P25 from Nippon Aerosil Co., Ltd.; 100A and 500A from Ube Industries, Ltd.; and Y-LOP from Titan Kogyo K.K. and calcined products thereof. Preferred of them are titanium dioxide and α-iron oxide.

Incorporation of carbon black into the nonmagnetic layer is effective in reducing the surface resistivity, decreasing light transmission, and attaining a desired micro Vickers hardness. The nonmagnetic layer generally has a micro Vickers hardness of 25 to 60 kg/mm² (245 to 588 MPa). A preferred micro Vickers hardness for good head contact is 30 to 50 kg/mm² (294 to 490 MPa) . A micro Vickers hardness can be measured with a thin film hardness tester (HMA-400 supplied by NEC Corp.) having an indenter equipped with a three-sided pyramid diamond tip, 80° angle and 0.1 µm end radius. Magnetic recording tapes are generally standardized to have an absorption of not more than 3% for infrared rays of around 900 nm. For example, the absorption of VHS tapes is standardized to be not more than 0.8%. Useful carbon black species for these purposes include furnace black for rubber, thermal black for rubber, carbon black for colors, and acetylene black.

The carbon black for use in the nonmagnetic layer has a specific surface area of 100 to 500 m²/g, preferably 150 to 400 m²/g, a DBP absorption of 20 to 400 ml/100 g, preferably 30 to 200 ml/100 g, and an average particle size of 5 to 80 nm, preferably 10 to 50 nm, still preferably 10 to 40 nm. The carbon black preferably has a pH of 2 to 10, a water content of 0.1 to 10% by weight, and a tap density of 0.1 to 1 g/ml.

Specific examples of commercially available carbon black products for use in the nonmagnetic layer include Black Pearls 2000, 1300, 1000, 900, 800, 880, and 700, and Vulcan XC-72 from Cabot Corp.; #3050B, #3150B, #3250B, #3750B, #3950B, #950, #650B, #970B, #850B, and MA-600 from Mitsubishi Chemical Corp.; Conductex SC and RAVEN 8800, 8000, 7000, 5750, 5250, 3500, 2100, 2000, 1800, 1500, 1255, and 1250 from Columbian Carbon; and Ketjen Black EC from Ketjen Black International Company.

Carbon black having been surface treated with a dispersing agent, etc., resin-grafted carbon black, or carbon black with its surface partially graphitized may be used. Carbon black may previously been dispersed in a binder before being added to a coating composition. Carbon black is used in an amount of 50% by weight or less based on the inorganic powder and 40% by weight or less based on the total weight of the nonmagnetic layer. The above-recited carbon black species can be used either individually or as a combination thereof. In selecting carbon black species for use in the nonmagnetic layer, reference can be made, e. g. , to Carbon Black Kyokai (ed.), Carbon Black Binran.

The nonmagnetic layer can contain organic powder according to the purpose. Useful organic powders include acrylic-styrene resin powders, benzoguanamine resin powders, melamine resin powders, and phthalocyanine pigments. Polyolefin resin powders, polyester resin powders, polyamide resin powders, polyimide resin powders, polyethylene fluoride resin, and polyaniline resin powders are also usable. Methods of preparing these resin powders are disclosed, e.g., in JP-A 62-18564 and JP-A 60-255827.

Known techniques about the kinds and amounts of binder resins, lubricants, dispersing agents, other additives, and solvents, methods of dispersing, and the like are appropriately applied to the magnetic and nonmagnetic layers and a backcoat of the magnetic recording medium of thew invention. In particular, known techniques with regard to the amounts and kinds of binder resins, additives, and dispersing agents are conveniently applied to the present invention.

If desired, an undercoat for adhesion enhancement may be provided between the nonmagnetic substrate and the nonmagnetic or magnetic layer. The undercoat is usually formed of an organic solvent-soluble polyester resin.

As previously stated, the nonmagnetic substrate preferably has a thickness of 3 to 80 µm. The thickness of the undercoat, if provided, is preferably 0.01 to 0.8 µm, still preferably 0.02 to 0.6 µm.

The thickness of the magnetic layer is optimized according to the saturation magnetization and the head gap of the head used and the recording signal band. It is preferably 100 nm or smaller, still preferably 30 to 80 nm, even still preferably 40 to 80 nm, with a coefficient of thickness variation being preferably within ±50%, still preferably ±40%. The magnetic layer may have a single layer structure or a multilayer structure composed of two or more magnetic sublayers different in magnetic characteristics. Known technology with reference to such a multilayer magnetic layer structure can be applied.

The thickness of the nonmagnetic layer is 0.5 to 2.0 µm, preferably 0.8 to 1.5 µm, still preferably 0.8 to 1.2 µm. The nonmagnetic layer manifests its effects as long as it is substantially nonmagnetic. Incorporation, either intentional or unintentional, of a small amount of a magnetic substance in the nonmagnetic layer does not impair the effects of the present invention. Such a layer structure, is understandably construed as being within the scope of the present invention. The language "substantially nonmagnetic" as referred to above is intended to mean that the nonmagnetic layer has a residual magnetic flux density of 10 m·T or less or a coercive force of 7.96 kA/m (100 Oe) or less. Desirably, the nonmagnetic layer has neither residual magnetic flux density nor coercive force.

Coating compositions for forming the magnetic layer and the nonmagnetic layer are each prepared by a method including at least the steps of kneading and dispersing and, if desired, the step of mixing which is provided before or after the step of kneading and/or the step of dispersing. Each step may be carried out in two or more divided stages. All the materials, including the magnetic powder, nonmagnetic powder, binder, carbon black, abrasive, antistatic, lubricant, and solvent, can be added at the beginning of or during any step. Individual materials may be separately dispersed in a dispersing medium and added in any step. Individual materials may be added in divided portions in two or more steps. For example, a polyurethane resin may be added dividedly in the kneading step, the dispersing step, and a mixing step which is provided for adjusting the viscosity of the dispersion. Known techniques for coating composition preparation can be applied as part of the method to achieve the object of the invention. The kneading step is preferably performed using a kneading machine with high kneading power, such as an open kneader, a continuous kneader, a pressure kneader, and an extruder. In using a kneader, the magnetic or nonmagnetic powder is kneaded with a part (preferably at least 30% by weight of the total binder) or the whole of a binder system and 15 to 500 parts by weight of a solvent per 100 parts by weight of the magnetic or nonmagnetic powder. For the details of the kneading operation, reference can be made to JP-A 1-106338 and JP-A 1-79274. In the step of dispersing, a medium such as glass beads can be used. High specific gravity media, such as zirconia beads, titania beads, and steel beads, are suitable. The size and mixing ratio of the dispersing beads should be optimized. Known dispersing equipment can be used.

A magnetic coating composition thus prepared is applied to a moving nonmagnetic substrate to form a magnetic layer of a desired thickness. Tow or more magnetic coating compositions may be applied successively or simultaneously. A nonmagnetic coating composition and a magnetic coating composition may be applied successively or simultaneously. Coating equipment includes an air doctor (air knife) coater, a blade coater, a rod coater, an extrusion coater, a squeegee coater, an impregnation coater, a reverse roll coater, a transfer roll coater, a gravure coater, a kiss roll coater, a cast coater, a spray coater, and a spin coater. For the details of coating techniques, reference can be made to Saishin Coating Gijyutsu, published by Sogo Gijyutsu Center, 1983.

In the production of tape media, the ferromagnetic metal powder in the coating layer is oriented in the machine direction using a cobalt magnet or a solenoid. In the case of disk media, although sufficiently isotropic orientation could sometimes be obtained without orientation using an orientation apparatus, it is preferred to use a known random orientation apparatus in which cobalt magnets are obliquely arranged in an alternate manner or an alternating magnetic field is applied with a solenoid. The "isotropic orientation" of ferromagnetic metal powder is preferably in-plane, two-dimensional random orientation but may be in-plane and perpendicular, three-dimensional random orientation. It is also possible to provide a disk with circumferentially isotropic magnetic characteristics by perpendicular orientation in a known manner, for example, by using facing magnets with their polarities opposite. Perpendicular orientation is particularly preferred for high density recording. Circumferential orientation may be achieved by spin coating.

It is preferred that the temperature and amount of drying air and the coating speed be adjusted to control the drying position of the coating layer. The coating speed is preferably 20 to 1000 m/min, and the drying air temperature is preferably 60°C or higher. The coating layer may be pre-dried before entering the magnet zone.

After drying, the coated wet is usually subjected to a smoothing treatment using, for example, supercalender rolls. By the smoothing treatment, voids generated by the solvent being released on drying disappear to increase the packing density of the ferromagnetic metal powder in the magnetic layer thereby providing a magnetic recording medium with improved electromagnetic characteristics. Calendering is carried out with rolls of heat-resistant plastics, such as epoxy resins, polyimide, polyamide and polyimide-amide. Metallic rolls are also usable.

It is desirable for the magnetic recording medium of the invention to have extremely high surface smoothness as having an average roughness Sa (arithmetic average deviation from mean plane) of 0.1 to 4 nm, preferably 1 to 3 nm, with a cut-off length of 0.25 mm. Such high surface smoothness can be achieved by proper choice of ferromagnetic metal powder and a binder and by calendering. Calendering is preferably carried out at a roll temperature of 60° to 100°C, still preferably 70° to 100°C, even still preferably 80° to 100°C, under a pressure of 100 to 500 kg/cm (98 to 490 kN/m), still preferably 200 to 450 kg/cm (196 to 441 kN/m), even still preferably 300 to 400 kg/cm (294 to 392 kN/m).

The resulting coated web is cut to size by means of a slitter, etc. While any type of slitters is usable, those having a plurality of sets of a rotating upper or male knife and a rotating lower or female knife are preferred. The slitting speed, depth of engagement between the upper and lower knives, upper knife to lower knife ratio of peripheral speed, hour of continuous use of the knives, and the like are decided appropriately.

The magnetic layer of the magnetic recording medium according to the invention preferably has a saturation flux density of 100 to 300 m·T and a coercive force Hc of 143.3 to 318.4 kA/m (1800 to 4000 Oe), still preferably 159.2 to 278. 6 kA/m (2000 to 3500 Oe) . The narrower the coercive force distribution, the more preferred. Accordingly, SFD and SFDr are preferably 0.6 or smaller, still preferably 0.2 or smaller.

The magnetic recording medium of the invention has a frictional coefficient of 0.50 or less, preferably 0.3 or less, on a head at temperatures of -10° to 40°C and humidities of 0% to 95%. The surface resistivity on the magnetic surface is preferably 10⁴ to 10¹² Ω/sq. The static potential is preferably -500 to +500 V. The magnetic layer preferably has an elastic modulus at 0.5% elongation of 0.98 to 19.6 GPa (100 to 2000 kg/mm²) in every in-plane direction and a breaking strength of 98 to 686 Mpa (10 to 70 kg/mm²). The magnetic recording medium preferably has an elastic modulus of 0.98 to 14.7 GPa (100 to 1500 kg/mm²) in every in-plane direction, a residual elongation of 0.5% or less, and a thermal shrinkage of 1% or less, still preferably 0.5% or less, even still preferably 0.1% or less, at temperatures of 100°C or lower.

The glass transition temperature (temperature at the maximum loss modulus in dynamic viscoelasticity measurement at 110 Hz, measured with a viscoelastometer, e.g., Rheovibron) of the magnetic layer is preferably 50° to 180°C, and that of the nonmagnetic lower layer is preferably 0° to 180°C. The loss modulus preferably ranges from 1x10⁷ to 8x10⁸ Pa (1x10⁸ to 8x10⁹ dyne/cm²). The loss tangent is preferably 0.2 or lower. Too high a loss tangent easily leads to a tack problem. It is desirable that these thermal and mechanical characteristics be substantially equal in all in-plane directions with differences falling within 10%.

The residual solvent content in the magnetic layer is preferably 100 mg/m² or less, still preferably 10 mg/m² or less. The magnetic layer and the nonmagnetic layer each preferably have a void of 30% by volume or less, still preferably 30% by volume or less. While a lower void is better for high output, there are cases in which a certain level of void is recommended in some applications. For instance, a relatively high void is often preferred for disk media, which put weight on durability against repeated use.

The magnetic layer preferably has a maximum peak-to-valley height SRₘₐₓ of 0.5 µm or smaller, a ten point average roughness SR_{z} of 0.3 µm or smaller, a maximum mean plane-to-peak height SRₚ of 0.3 µm or smaller, a maximum mean plane-to-valley depth SRᵥ of 0.3 µm or smaller, a mean plane area ratio SSr of 20% to 80%, and an average wavelength Sλₐ of 5 to 300 µm. The surface profile of the magnetic layer represented by these parameters can easily be controlled by, for example, controlling the surface profile of the substrate (which can be done by means of a filler) or of calender rolls. Curling of the magnetic recording medium is preferably within ±3 mm.

In the case where the magnetic recording medium has a nonmagnetic layer between the substrate and the magnetic layer, the physical properties can be varied between the lower nonmagnetic layer and the upper magnetic layers according to the purpose. For example, the elastic modulus of the magnetic layer can be set relatively high to improve running durability, while that of the nonmagnetic layer can be set relatively low to improve head contact.

### EXAMPLES

The present invention will now be illustrated in greater detail with reference to Examples, but it should be understood that the invention is not construed as being limited thereto. Unless otherwise noted, all the parts and percents are by weight.

### EXAMPLE 1

### (1) Preparation of magnetic coating composition for upper layer

| | | |
|---|---|---|
| (a) | Ferromagnetic metal powder (see Table 1) | 100 parts |
| (b) | Vinyl chloride resin (MR-110 from Zeon Corp.) | 10 parts |
| | Polyurethane (UR-8300 from Toyobo) | 6 parts (solid basis) |
| | Phenylphosphonic acid | 4 parts |
| | Methyl ethyl ketone/cyclohexanone (1/1) | 40 parts |
| (c) | Alpha-alumina (average particle size: 0.2 µm) | 10 parts |
| | Carbon black (average particle size: 80 nm) | 2 parts |
| | Methyl ethyl ketone/cyclohexanone (1/1) | 200 parts |
| (d) | Curing agent (Coronate 3041 from Nippon Polyurethane Industry Co., Ltd.) | 4 parts (solid basis) |
| | Stearic acid | see Table 1 |
| | Sec-butyl stearate | see Table 1 |
| | Toluene | 50 parts |

Component (a) was ground in an open kneader for 10 minutes . Components (b) were added thereto, followed by kneading for 60 minutes. Components (c) were mixed therein, and the mixture was dispersed in a sand grinder for 120 minutes. Finally, components (d) were added, followed by stirring for 20 minutes, followed by filtration through a filter having an average opening size of 1 µm to prepare a magnetic coating composition.

### (2) Preparation of nonmagnetic coating composition for lower layer

| | |
|---|---|
| Nonmagnetic powder α-iron oxide (average primary particle size: 0.09 µm; S_{BET}: 50 m²/g; pH: 7; DBP absorption: 27-38 ml/100 g; surface treating compound: 8% Al₂O₃) | 100 parts |
| Carbon black (Conductex SC-U from Columbian Carbon) | 15 parts |
| Vinyl chloride copolymer (MR-110, from Zeon Corp.) | 13 parts |
| Polyurethane resin (UR-8200 from Toyobo) | 5 parts (solid basis) |
| Phenylphosphonic acid | 3.5 parts |
| Sec-butyl stearate | see Table 1 |
| Stearic acid | see Table 1 |
| Methyl ethyl ketone | 205 parts |
| Cyclohexanone | 135 parts |

The above components were kneaded in a kneader and then dispersed in a sand mill for 10 hours. To the dispersion were added 2.5 parts of a polyisocyanate compound and 3 parts of methyl ethyl ketone, followed by stirring followed by filtration through a filter having an average opening size of 1 µm to prepare a nonmagnetic coating composition.

### (3) Preparation of magnetic tape

The nonmagnetic coating composition for lower layer and the magnetic coating composition for upper layer prepared above were applied simultaneously to a substrate web to dry thicknesses of 1.1 µm and 0.10 µm, respectively. While the coating layers were wet, the coated web was subjected to a magnetic orientation treatment using a cobalt magnet having a magnetic force of 600 mT (6000 G) and a solenoid having a magnetic force of 600 mT (6000 G). After drying, the coated web was calendered on a 7-roll calender having only metal rolls at a temperature of 90°C under a linear pressure of 294 kN/m (300 kg/cm). A backcoating composition having 100 parts of carbon black (average particle size: 17 nm) and 5 parts of α-alumina (average particle size: 200 nm) dispersed in a nitrocellulose resins, a polyurethane resin, and a polyisocyanate was applied to the uncoated side of the coated web to a dry thickness of 0.5 µm. The web was slit to half inch width, and the magnetic layer was cleaned on a tape cleaning device to give a magnetic tape of Example 1. The tape cleaning device used here was of the type including a slit tape delivery and take-up system and having nonwoven fabric and a blade configured to be pressed onto the magnetic layer surface.

### EXAMPLES 2 TO 18

Magnetic tapes were produced in the same manner as in Example 1, except for alterations to the kind of the ferromagnetic metal powder, the amounts of phenylphosphonic acid, stearic acid, and vinyl chloride resin used in the magnetic coating composition and the amounts of carbon black and sec-butyl stearate used in the lower nonmagnetic coating composition as shown in Table 1 . The tapes of Examples 16 to 18 were each treated with a sapphire blade or a diamond blade.

**TABLE 1**

| Example No. | Upper Layer | | | | | | | | | Lower Layer | |
|---|---|---|---|---|---|---|---|---|---|---|---|
| | Magnetic Powder | | | Binder System (part) | | | Surface Treating Agent | Fatty Acid | Fatty Acid Ester | Carbon Black (part ) | Fatty Acid Ester |
| | Co/Fe (at%) | Y/ (Fe+C o) (at%) | Avg Length (nm) | VC | PU | Curing Agent | PPA (part) | SA (part ) | sBS (part ) | | sBS (part ) |
| 1 | 25 | 18 | 60 | 10 | 6 | 4 | 4 | 0.5 | 1.5 | 1.5 | 1.5 |
| 2 | 25 | 18 | 47 | 10 | 6 | 4 | 4 | 0.5 | 1.5 | 1.5 | 1.5 |
| 3 | 25 | 10 | 45 | 10 | 6 | 4 | 4 | 0.5 | 1.5 | 1.5 | 1.5 |
| 4 | 40 | 10 | 48 | 10 | 6 | 4 | 4 | 0.5 | 1.5 | 1.5 | 1.5 |
| 5 | the same as Examples 2, 3 and 5 4, respectively | | | 5 | 11 | 4 | 4 | 0.5 | 1.5 | 1.5 | 1.5 |
| 6 | | | | 5 | 11 | 4 | 4 | 0.5 | 1.5 | 1.5 | 1.5 |
| 7 | | | | 5 | 11 | 4 | 4 | 0.5 | 1.5 | 1.5 | 1.5 |
| 8 | the same as Examples 2, 3 and 4, respectively | | | 10 | 6 | 4 | 0 | 0.5 | 1.5 | 1.5 | 1.5 |
| 9 | | | | 10 | 6 | 4 | 0 | 0.5 | 1.5 | 1.5 | 1.5 |
| 10 | | | | 10 | 6 | 4 | 0 | 0.25 | 1.5 | 1.5 | 1.5 |
| 11 | the same as Examples 2, 3 and 4, respectively | | | 10 | 6 | 4 | 4 | 0.25 | 1.5 | 1.5 | 1.5 |
| 12 | | | | 10 | 6 | 4 | 4 | 0.25 | 1.5 | 1.5 | 1.5 |
| 13 | | | | 10 | 6 | 4 | 4 | 0.2.5 | 1.5 | 1.5 | 1.5 |
| 14 | the same as Examples 3 and 4, respectively | | | 10 | 6 | 4 | 4 | 0.5 | 1.5 | 3 | 1.5 |
| 15 | | | | 10 | 6 | 4 | 4 | 0.5 | 1.5 | 3 | 1.5 |
| 16* | the same as Examples 2, 3 and 4, respectively | | | 10 | 6 | 4 | 4 | 0.5 | 1.5 | 1.5 | 1.5 |
| 17* | | | | 10 | 6 | 4 | 4 | 0.5 | 1.5 | 1.5 | 1.5 |
| 18* | | | | 10 | 6 | 4 | 4 | 0.5 | 1.5 | 1.5 | 1.5 |

| | | | | | | | | | | | |
|---|---|---|---|---|---|---|---|---|---|---|---|
| Abbreviations used: at%, atom percent; VC, vinyl chloride resin; PU, polyurethane; PPA, phenylphosphonic acid; SA, stearic acid; sBS, sec-butyl stearate *: The magnetic layer was treated with a sapphire blade. | | | | | | | | | | | |

Each of the resulting magnetic tapes was evaluated as follows. The results obtained are shown in Table 2.

### (1) Output reduction and head contamination due to running

A reel of tape (reel length: 600 m) was tested on a reel-to-reel tester equipped with an MIG head (gap length: 0.15 µm, 1.8 T) as a write head and an MR head as a read head at a recording wavelength of 0.2 µm and a tape speed of 3 m/sec. A reduction in output experienced from the start to end of running was measured, and head contamination after running was observed.

### (2) Reduction in MR value

Measurement was carried out in the manner previously described. That is, a reel of recorded tape was repeatedly run on an LTO-G3 drive supplied from IBM at 13°C and 15% RH. The tape was run 120 passes, and the number of passes at the time when the resistance of the MR head (hereinafter referred to as "MR value") decreased by 40 Ω was counted as an MR head resistance reduction test value.

### (3) Quantification of fatty acid yttrium salt, cobalt, and iron by TOF-SIMS

The surface of the magnetic layer of the tape as obtained was analyzed with TOF-SIMS IV instrument from ION-TOF GmbH using Au³⁺ at a primary ion current of 0.08 pA. A fragment of a fatty acid yttrium salt was C₁₈H₃₆O₃Y having a peak at m/z=389.17. The m/z value of cobalt was 58.93, and that of Fe was 55.93. Apercentratio of the fragment intensity of the fatty acid yttrium salt to the total fragment intensity of iron and cobalt was obtained.

### (4) Overall rating

The tapes were rated based on the following scale.
A: Little head contamination is observed. No reduction in MR value occurs during 120 passes.
B: Slight head contamination and slight reduction in output are observed to unproblematic degrees. A reduction in MR value occurs to an unproblematic degree, which is restored during running to allow for 120 passes.
C: Slight head contamination is observed. An output reduction is within-3 dB. A variation in MR value occurs but is restored during running. The tape is comprehensively judged unproblematic in its ordinary use.
D: Head contamination is observed. A reduction in MR value occurs in or before the 85th pass.
E: Contamination is observed all over the head. A reduction in MR value occurs in or before the 50th pass.

**TABLE 2**

| Example No. | Output Reduction (dB) | Head Contamination after Running | Number of Passes before MR Value Reduction | C₁₈H₃₆O₃Y/(Fe+Co) in TOF-SIMS (%) | Overall Rating |
|---|---|---|---|---|---|
| 1 | 0 | slight contamination on part of the head | 120 | 0.55 | D* |
| 2 | -3 | small amount of contamination all over the head | 50 | 1.20 | E |
| 3 | -1 | do. | 70 | 0.95 | D |
| 4 | -2 | contamination on part of the head | 100 | 0.82 | C |
| 5 | 0 | small amount of contamination all over the head | 70 | 0.86 | D |
| 6 | 0 | do. | 85 | 0.76 | D |
| 7 | -1 | do. | MR value reduction once observed but restored to allow for 120 passes | 0.65 | C |
| 8 | -7 | considerable contamination all over the head | 10 or less | 1.35 | E |
| 9 | -7 | do. | 10 or less | 1.15 | E |
| 10 | -7 | do. | 10 or less | 1.23 | E |
| 11 | -1 | slight contamination all over the head | 120 | 0.55 | A |
| 12 | 0 | do. | 120 | 0.45 | A |
| 13 | 0 | do. | 120 | 0.36 | A |
| 14 | 0 | no contamination | 120 | 0.53 | A |
| 15 | 0 | do. | 120 | 0.45 | A |
| 16 | -1 | slight contamination on head | 100 | 0.75 | C |
| 17 | 0 | no contamination | MR value reduction once observed but restored to allow for 120 passes | 0.65 | B |
| 18 | 0 | do. | 120 | 0.52 | A |

| | | | | | |
|---|---|---|---|---|---|
| *: The magnetic particles were unsuitably large for application to high-density recording. | | | | | |

Table 2 proves that the more the amount of a fatty acid yttrium salt on the magnetic tape surface, the more head contamination after running, and the less the number of passes before the MR value reduction.

It is seen that, with the yttrium content in the magnetic substance being equal, a fatty acid yttrium salt is more liable to be formed when the magnetic powder particles are smaller in size. It is understandable that skillful use of fine magnetic particles is demanded to further increase the recording density of magnetic recording media, and addition of yttrium is an effective means for the synthesis of fine magnetic particles. Nevertheless, the presence of yttrium easily results in the formation of a fatty acid yttrium salt. Hence, to quantify and control the fatty acid yttrium salt on the magnetic layer surface is a very significant technique. The results in Table 2 reveal that excellent running characteristics are secured when the fragment intensity of the fatty acid yttrium salt is 1% or less, desirably 0.7% or less, more desirably 0.55% or less, based on the total fragment intensity of iron and cobalt. This is considered to be because the fatty acid yttrium salt formed on the magnetic layer surface causes head contamination, which, for some unknown reasons, appears to influence the magnetoresistance of the MR head.

This application is based on Japanese Patent application JP 2006-99934, filed March 31, 2006, the entire content of which is hereby incorporated by reference, the same as if set forth at length.

## Claims

1. A magnetic recording medium comprising a substrate and a magnetic layer containing ferromagnetic metal powder and a binder,
wherein the ferromagnetic metal powder contains iron, cobalt and from 2 to 20 atom% of yttrium based on a total of iron and cobalt contained in the ferromagnetic metal powder and has an average length of 50 nm or smaller, and
the magnetic recording medium has a test value of at least 100 passes in a magnetoresistive head resistance reduction test performed as follows:
A 600 m long magnetic recording medium of tape form is recorded and repeatedly reproduced while being shuttled on a drive equipped with an MR head in a 13°C, 15% RH environment until the resistance of the MR head reduces by 40 Ω, and a number of passes of the tape at that time is a test value.

2. The magnetic recording medium according to claim 1, wherein the magnetic layer has a thickness of 100 nm or smaller.

3. The magnetic recording medium according to claim 1, wherein the ferromagnetic metal powder has an average breadth of 15 nm or smaller.

4. The magnetic recording medium according to claim 1, further comprising a nonmagnetic layer containing nonmagnetic powder and a binder between the substrate and the magnetic layer.

5. The magnetic recording medium according to claim 1, wherein a fragment intensity of fatty acid metal salt on a surface of the magnetic layer detected by use of a time-of-flight secondary ion mass spectrometer is 1% or less based on a total fragment intensity of iron and cobalt on the surface of the magnetic layer.

6. The magnetic recording medium according to claim 1, wherein a fragment intensity of fatty acid metal salt on a surface of the magnetic layer detected by use of a time-of-flight secondary ion mass spectrometer is 0.7% or less based on a total fragment intensity of iron and cobalt on the surface of the magnetic layer.

7. A process for producing the magnetic recording medium according to claim 1, comprising:
detecting fragment ions of an organic compound on a surface of the magnetic layer by use of a time-of-flight secondary ion mass spectrometer.

8. The process according to claim 7, wherein the organic compound is a fatty acid metal salt.

9. The process according to claim 8, wherein a fragment intensity of the fatty acid metal salt is 1% or less based on a total fragment intensity of iron and cobalt.

10. The process according to claim 9, wherein the fatty acid metal salt is a yttrium salt, and a fragment intensity of the yttrium salt is 1% or less based on the total fragment intensity of iron and cobalt.
